# EUROPEAN PATENT APPLICATION

(11) **EP 2 709 416 A1**
(43) Date of publication of application: **19.03.2014**
(21) Application number: 12306129.3
(22) Date of filing: 18.09.2012
(51) Int. Cl.: H04W 72/12

(54) **A method for allocating transmission resource in HD FDD wireless communication systems**

(71) Applicant: Alcatel Lucent, 75007 Paris (FR)
(72) Inventor: Grand, Jean-Yves, 44708 ORVAULT (FR); Neuville, Emmanuel, 91620 NOZAY (FR)
(74) Representative: 2SPL Patentanwälte

(57) **Abstract**

A method for allocating transmission resource in a Half Duplex Frequency Division Duplexing wireless communication system, said method comprising the following steps
- using uplink and downlink subframes to form an user equipment profile (**P1-P7**) for unicast uplink and unicast downlink transmission;
- using broadcast subframes to form a broadcast profile for downlink broadcast transmission so that the said broadcast subframes comprised within the said broadcast profile match with downlink subframes comprised within the said user equipment profile;
- allocating the said user equipment profile and the said broadcast profile to a user equipment.

## Description

### FIELD OF THE INVENTION

The present invention relates to a method for transmission resource allocation in half-duplex FDD wireless communication systems.

### BACKGROUND OF THE INVENTION

With the incessant proliferation of wireless communications standards and intensive use of frequency bands, User Equipments (UEs) are expected to support various cellular system standards and several frequency bands. For instance, the air interface of Long Term Evolution (LTE) enables different access modes at LTE UEs, notably Full Duplex Frequency Division Duplexing, Half Duplex Frequency Division Duplexing and Time Division Duplexing, respectively, designated hereafter FD-FDD, HD-FDD, and TDD.

In particular, HD-FDD is generally seen as size- and power-effective approach for UEs to support more than one frequency bands. In fact, with HD-FDD, the UE separates the up and down streams in both frequency and time, i.e. the UE is configured
- to use two separate frequency bands: one dedicated for the uplink and the second dedicated to the downlink, and
- to not support simultaneous transmission and reception: uplink and downlink transmissions are non-overlapping in time.

Such HD-FDD operations permit multiple UEs to time-share uplink and downlink frequency bands, which may be advantageous for a base station (eNodeB) to manage broadcast transmissions such as Multimedia Broadcast (such as digital TV) and Multicast Services (MBMS) or eMBMS (for evolved MBMS).

However, LTE devices that need HD-FDD transmission may have difficulties to transmit or receive unicast data when they are in the same time interested to a Broadcast transmission. For example, for an UE operating in HD-FDD mode and receiving MBMS service, if it is interested to transmit or receive unicast data (such as a cellular phone call, an email message, a Short Service Message, an on-demand audio program, or an on-demand video program), then it is constrained to stay in idle/passive mode (i.e. only receiving) till the end or the stopping of the MBMS service.

One object of the present invention is to enable simultaneous unicast and broadcast communications for UEs operating in HD-FDD mode.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for a method for allocating transmission resource in a Half Duplex Frequency Division Duplexing wireless communication system, said method comprising the following steps
- using uplink and downlink subframes to form an user equipment profile for unicast uplink and unicast downlink transmission;
- using broadcast subframes to form a broadcast profile for downlink broadcast transmission so that the said broadcast subframes comprised within the said broadcast profile match with downlink subframes comprised within the said user equipment profile;
- allocating the said user equipment profile and the said broadcast profile to a user equipment.

In accordance with a broad aspect, the duration of the formed user equipment profile is an integer number of the radio frame duration.

In accordance with another broad aspect, further user equipment profile is derived from the formed user equipment profile by circularly shifting the formed user equipment profile.

In accordance with another broad aspect, a further broadcast profile is formed, using broadcast subframes, so that the said broadcast subframes comprised within the said further broadcast profile match with downlink subframes comprised within the said further user equipment profile.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims, The following non-restrictive description of preferred embodiments is given for the purpose of exemplification only with reference to the accompanying drawing in which
- FIG.1 and FIG.2 are two schematic diagrams illustrating two unicast transmission patterns;
- FIG.3 and FIG.4 are two schematic diagrams illustrating UE profiles obtained from the subframes patterns used for unicast transmission;
- FIG.5 and FIG.6 are two schematic diagrams illustrating UE profiles enabling unicast and/or broadcast transmissions according to different embodiments.

### DETAILED DESCRIPTION OF ILLUSTRATIVE EMBODIMENTS

A serving base station within an LTE radio cell is configured to assign, through scheduling operations, a periodic transmission pattern to UEs operating on HD-FDD for uplink and downlink transmission.

Such periodic transmission pattern consists of a number of subframes dedicated to Uplink **(U),** to Downlink **(D),** and/or to Downlink broadcast **(B)** (used by the UE either to read MBMS services or broadcasted System Information Blocks that give information on the cell), as well as of guard subframes where no transmissions take place. More generally, these subframe patterns are conventionally composed of eight subframes SF (from **0** to **7**), each being of one millisecond (ms) duration. Thus, the resulting subframe pattern is of 8 ms duration.

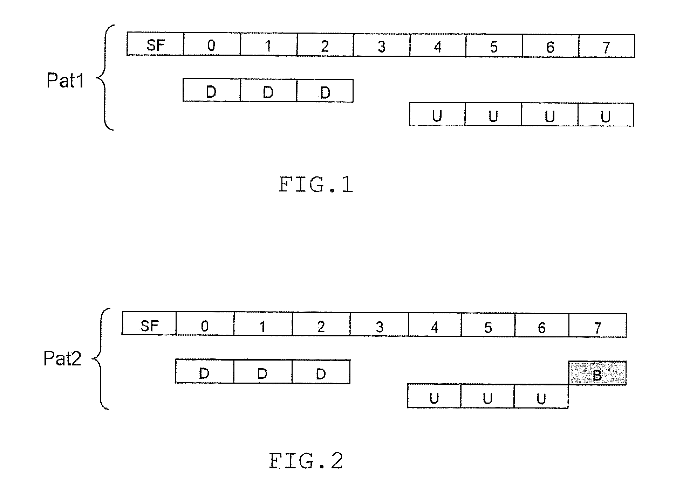

As illustrative examples, figures 1 and 2 show two different subframe patterns **Pat1** and **Pat2**. The subframe pattern **Pat1** of figure 1 comprises
- three subframes **SF 0-2** that can transport full Downlink **D** transmission;
- one guard subframe **SF 3 ;** and
- four subframes **SF 4-7** that can transport full Uplink **U** transmission.

The subframe pattern **Pat2** of figure 2 comprises
- three subframes **SF 0-2** that can transport full Downlink **D** transmission;
- one guard subframe **SF 3 ;**
- three subframes **SF 4-6** that can transport full Uplink **U** transmission; and
- one subframe **SF 7** that can transport Downlink Broadcast **B**.

Besides, according to 3GPP specifications, the LTE radio frame is composed of ten subframes of one millisecond (ms) duration each, constituting a radio frame of ten ms.

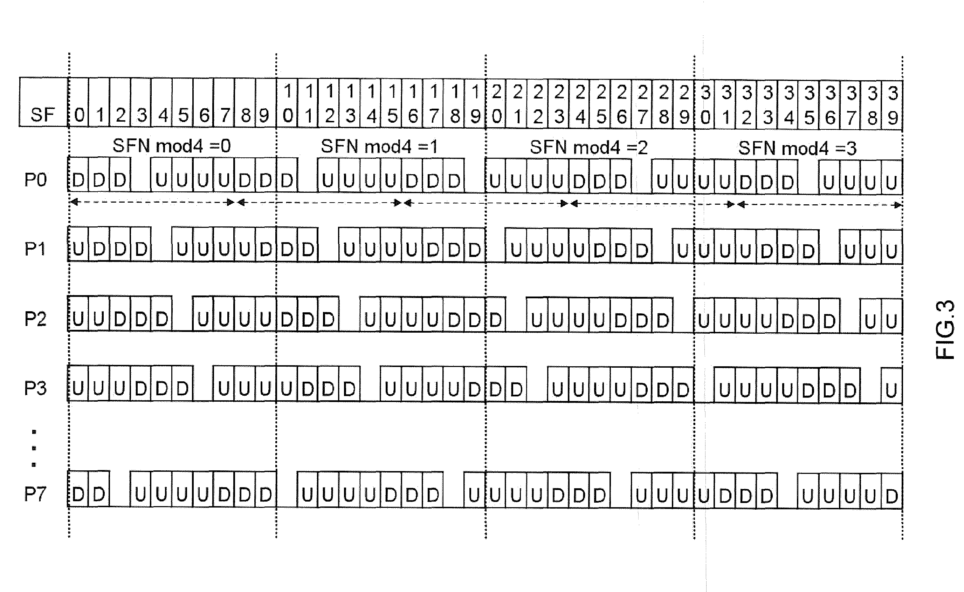

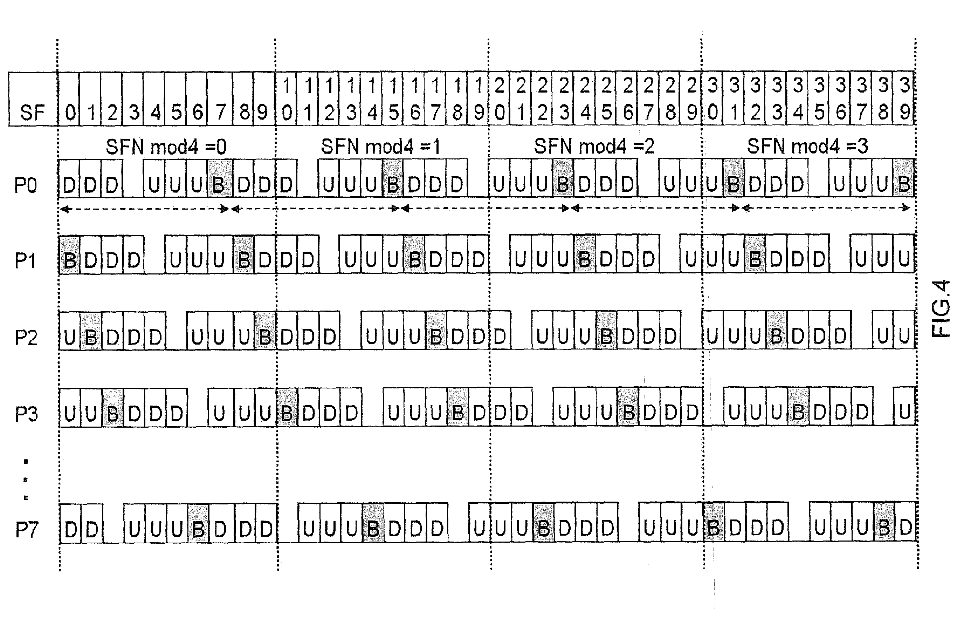

With reference now to figure 3 (respectively 4), the subframe pattern **Pat1** (respectively **Pat2)** is repeated **n**, times (**n** being an integer greater than one) so that the resulting total duration is an integer number of frame duration (10 ms). In other words, the subframe pattern is repeated, in a juxtaposition manner (underlined in dashed lines in figures 3 and 4), so that the duration of the resulting patterns juxtaposition is an integer number of frame duration, namely a multiple of 10 ms. This results in what designated below an UE profile.

In this regard, a subframe pattern may be repeated, for example, five, ten, fifteen or twenty times to obtain an UE profile **P0** that the duration is, respectively, four, eight, twelve, or sixteen times the duration of an LTE radio frame.

For instance, the subframe patterns **Pat1** (respectively **Pat2)** is repeated five times in figure 3 (respectively 4) in order to obtain forty ms which corresponds to the duration of four frames (vertically separated with dotted lines).

The UE profile **P0** (in figure 3 as well in figure 4) starts at the System Frame Number (SFN) modulo 4 (i.e. from zero to three). The subframes **SF** are numbered from **00** to **39:** the first digit is the SFN mod4 (0 to 3), and the second digit is the LTE subframe number per frame (0 to 9),

Seven further UE profiles **P1-P7** (in figure 3 as well in figure 4) are deduced
- from the UE profile **P0** by circularly shifting the profile **P0** by the corresponding number of subframes **SF:** UE profile **P1** is deduced from UE profile **P0** by circularly shifting profile **P0** by one subframe **SF** and UE profile **P7** is deduced from UE profile **P0** by circularly shifting UE profile **P0** by seven subframes **SF,** or equivalently
- from the preceding profile by a shift of one subframe **SF** (i.e. profile **P1** is deduced from profile **P0** by a shift of one subframe **SF,** profile **P2** is deduced from profile **P1** by a shift of one subframe **SF,** and so on up to profile **P7** which may be deduced from profile **P6** by a shift of one subframe **SF).**

The formed UE profiles (of type **P0-P7** of figures 3 and 4), respectively, from the subframe patterns **Pat1** and **Pat2** are used for MBMS transmission. Of course, the number of the constituted UE profiles depends on the number of repetition **n** of the subframe pattern to form a UE profile **P0,** as well as on the adopted processing to obtain derivative UE profiles.

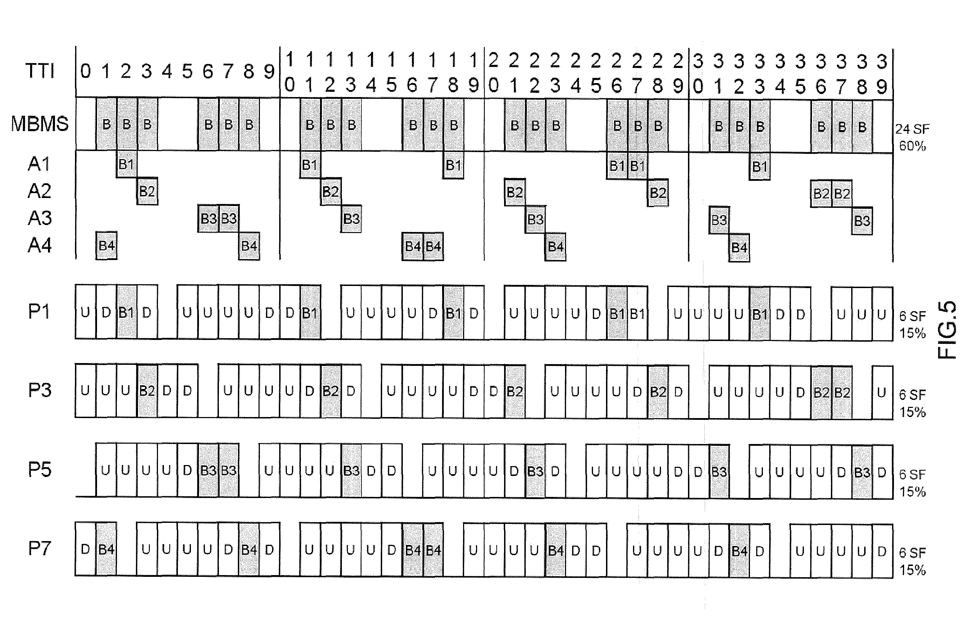

As shown in figure 5 (row MBMS), for LTE FDD, MBMS can only use the subframes 1,2,3,6,7,8 in a LTE frame of 10 ms. Accordingly, within four frames, the MBMS part may use up to 60% of the bandwidth (i.e., in the illustrative example of a UE profile composed of four frames, 24 subframes on a total of 40 subframes).

In the rows **A1-A4** of figure 5, MBMS subframes are split, in non-overlapping subframes, into the number of frames per profile (i.e. 4 in the illustrative example of figure 5) parts covered by the same number (i.e. 4) Multicast Broadcast Single Frequency Network (MBSFN) areas **A1-A4.** In fact, this split is based on a MBMS profile having a periodicity compatible with the MBSFN resource definition. Further, this split is **N** times the duration of the UE profile **P0** (i.e., in the particular case of figure 5, **N** times 40 ms). Visibly, for illustration purpose, while facilitating the representation, figure 5 illustrate the example of **N**=1, without limiting in any way the cases with higher values of **N**.

In the example of figure 5, MBMS subframes per UE profile (i.e. in this case per 40 ms) are fairly split/partition among the MBSFN areas **A1-A4,** each area having 15% of the available MBMS resource. Otherwise, MBMS subframes SF resources may be split differently among MBSFN areas **A1-A4.**

In particular, MBMS subframes are split among MBSFN area **A1-A4** such that MBMS subframes assigned to a given MBSFN area match with the Downlink subframes **D** of at least a UE profile.

In other words, the MBMS resources of one MBSFN area **A1-A4** are chosen in order to fit with the Downlink subframes **D** of a predetermined UE profile. In the example of figure 5, the MBMS subframes used by the MBSFN area **A1** are compatible with the UE profile **P1:** the MBMS subframes **SF 2, 11, 18, 26, 27, 33,** respectively designed by **B1** and forming a broadcast profile, match with Downlink subframes **D** within profile **P1.** Accordingly, these subframes **D** within the UE profile **P1** are substituted by their corresponding MBMS subframe **B1** in which the UE is scheduled to receive broadcast data.

In the same way,
- the MBMS subframes used by the MBSFN area **A2** are compatible with the UE profile **P2:** the MBMS subframes **SF 3, 12, 21, 28, 36, 37,** respectively designed by **B2** and forming a broadcast profile, match with Downlink subframes **D** within UE profile **P2**. Accordingly, these subframes **D** within the UE profile **P2** are substituted by their corresponding MBMS subframe **B2** in which the UE is scheduled to receive broadcast data;
- the MBMS subframes used by the MBSFN area **A3** are compatible with the UE profile **P3:** the MBMS subframes **SF 6, 7, 13, 22, 31, 38,** respectively designed by **B3** and forming a broadcast profile, match with Downlink subframes **D** within UE profile **P3.** Accordingly, these subframes **D** within the UE profile **P3** are substituted by their corresponding MBMS subframe **B3** in which the UE is scheduled to receive broadcast data;
- the MBMS subframes used by the MBSFN area **A4** are compatible with the UE profile **P3:** the MBMS, subframes **SF 1, 8, 16, 17, 23, 32,** respectively designed by **B4** and forming a broadcast profile, match with Downlink subframes **D** within UE profile **P4**. Accordingly, these subframes **D** within the UE profile **P4** are substituted by their corresponding MBMS subframe **B4** in which the UE is scheduled to receive broadcast data.

The above-described matching between the downlink subframes **D** of UE profiles **P1, P3**, **P5, P7** and broadcast profiles (i.e. MBMS subframes **B1-B4** allocation among MBSFN areas **A1-A4)** has to be guaranteed, independently of the UE profile length (i.e. 40 ms), of the UE profile structure (figures 3 and 4), and of the illustrative MBMS subframes allocation among MBSFN area **A1-A4** of figure 5.

UE profiles **P1, P3**, **P5, P7** are associated to predefined MBMS services (such as digital TV stations, Push-to-Talk services or any other multimedia broadcast and/or multicast service) in such a way that when a UE requests, from the MBSFN area **A1** (respectively, **A2, A3**, **A4),** a given service (for example, a given digital TV station), the UE profile **P1** (respectively, **P3**, **P5, P7)** (see figure 5) that corresponds to the requested service is automatically signaled to the requesting UE. Accordingly, thanks to the particular matching between the downlink subframes **D** of UE profiles **P1, P3, P5, P7)** and broadcast profiles (i.e. MBMS subframes **B1-B4** allocation among MBSFN areas **A1-A4)** the UE is able to simultaneously establish unicast and broadcast communications.

In order to associate the UE profile **P1** (respectively, **P3**, **P5,** and **P7**) for unicast uplink and unicast downlink with the broadcast profile **B1** (respectively, **B2, B3** and **B4)** used for MBMS, the UE notifies its interest for a given service by sending a message to the eNodeB. In accordance with the 3GPP standards, the UE can use the counting message, so that the eNodeB allocate or reallocate (change an already allocated) a unicast profile compatible with the MBMS profile used by the area of the requested service. To do so, the eNodeB declares (according to the 3GPP standard) that the requested service need to use a counting message in order to force the broadcast (counting is normally used to have the possibility to not broadcast the service when no UE or few UEs are interested to receive this service). In the present case, even if the requested service needs counting, this service will always be sent and the counting will allow to be aware of the fact that the UE is interested by this service.

In one embodiment, when a connection is established between the eNodeB and a certain UE using an UE profile for unicast uplink and unicast downlink transmission, the eNodeB reallocate (i.e. change the unicast profile and choose) an unicast profile that is compatible with the profile of the requested service by the UE or with the MBSFN area.

In other words, an UE profile for unicast uplink and unicast transmission is used for the connection of the UE to the ENodeB. Then, according to the requested broadcast transmission (namely, the requested MBMS service) by the UE, this UE profile may be substituted by a formed UE profile for unicast transmission compatible with a broadcast profile of the requested service or with the MBSFN area from which the UE is connecting.

In one embodiment, the knowledge of the comparability between the broadcast profiles (namely, MBMS profiles) and the UE profiles for unicast uplink and unicast downlink transmission is maintained by a network entity which is configured to dynamically provide at least a MBMS profile compatible with a given UE profile, or in coordination with a control plane entity such as the MBMS Coordination Entity (MCE).

The base station covering the MBSFN area **A1** and having the broadcast profile formed from **B1** uses counting in order to be aware of the interest of the UE for a certain MBMS service available within the MBSFN area **A1** and allocates for this UE the UE profile **P1** (see figure 5) pre-associated to the requested MBMS service. If the initial UE profile (i.e. that is used for opening the communication session) is different from **P1,** a RRC (Radio Resource Control) radio reconfiguration may be needed compatible with the **P1** profile. In fact, the UE is not aware of the profile **P1:** the scheduling scheme including RRC parameters is dynamically performed and the UE only takes the grant information to know dynamically the uplink or downlink subframes such that the UE profile **P1** is dynamically allocated thereto.

In the illustrative example of figure 5, six subframes per profile are dedicated to MBMS in each of the UE profiles **P1, P3**, **P5**, **P7**, and respectively designated **B1-B4,** leading up to a 15% usage of the bandwidth for MBMS (same SF balance for all profile that give 4x15%=60% 60% being the maximum of MBSFN capacity).

The UE that does not send counting, may be assigned the UE profiles that have no link with MBMS such as UE profiles **P0, P2**, **P4**, and **P6** of the illustrative example of figure 4.

Depending on the subframe pattern **Pat1-Pat2** of the UE profile **P1-P7** and the repartition of the SF between the MBSFN area profiles, the maximum of Downlink **D** transmission resources per UE profile may change. For example, the UE profiles of figure 5, based on the subframe pattern **Pat1** (4U, 3D) of figure 1, the maximum of Downlink **D** transmission resources is 22.5% (i.e. 9 subframes **D** of a total of 40 subframes), while with the subframe pattern **Pat2** (3U, 3D, 1B) of figure 2, the maximum is 30%.

Furthermore, it is to be noted that, if the LTE cell is mainly used for "Push-to-Talk" or "Push-to-share function", the UE has few Uplink need (mainly the resources for Push+ signaling) and very few unicast Downlink (mainly signaling).

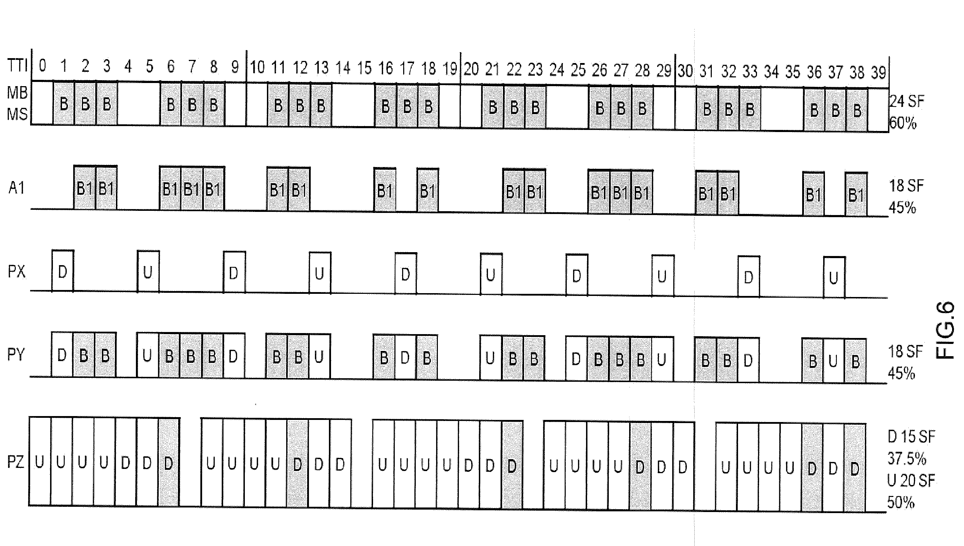

In particular, if an UE that Push, within a given area **A1-A4,** don't need the broadcasted Downlink, this UE can have any UE profile with significant Uplink resources. Therefore, the other UEs can use a profile with very few unicast opportunities that can give lots of MBMS transmission opportunities (see fig 6 as example).

With reference to figure 6, the UE profile for Push like **PZ** is favorable for the UE that
- use only unicast making the push offer up to 50% of the Uplink resources;
- has in the same time a Downlink capacity of 22.5% (9SF/40SF) to 37.5% (15SF/40SP); and
- does not receive MBMS, service during the push. Of course the DL SF cannot be used for DL data transmission if the SF is effectively used for sending MBSFN service. It is the case of SF 6, 12, 22, 28, 36, 38.

A UE profile **PY** comprises 18 subframes SF dedicated for MBMS, 45% of the Downlink/Uplink transmission resources (56% of the Max MBMS transmission).

The UE profile **PX** is a basic UE profile used just for signaling or very small throughput. The UE profile **PX** may be assigned by default and the other profiles may be assigned when a significant dedicated bearer is requested or dynamically allocated if the needed throughput increases.

If only the profile PY is used, counting is not mandatory.

It is worth noting that other forms of UE profiles may be used in the same manner with more Uplink/Downlink subframes and less free subframes and MBMS subframes.

It is to be noted also that for the UE profile **(P0-P7, PX, PY**, **PZ**) other periodicity may also be used, notably with k*40 ms (k being a positive integer). In fact, for MBMS, the LTE periodicity is not constrained as long as the choice of MBMS resources respects the corresponding UE profile.

Advantageously, the above-described method for transmission resource allocation within a HD-FDD communication network may be implemented in any base station that supports HD-FDD UEs such as an LTE base station.

## Claims

1. A method for allocating transmission resource in a Half Duplex Frequency Division Duplexing wireless communication system, said method comprising the following steps
- using uplink and downlink subframes to form an user equipment profile **(P1-P7)** for unicast uplink and unicast downlink transmission;
- using broadcast subframes to form a broadcast profile for downlink broadcast transmission so that the said broadcast subframes comprised within the said broadcast profile match with downlink subframes comprised within the said user equipment profile;
- allocating the said user equipment profile and the said broadcast profile to a user equipment.

2. The method of claim 1, wherein the duration of the formed user equipment profile is an integer number of the radio frame duration.

3. The method of claim 1 or 2, wherein at least a further user equipment profile is derived from the formed user equipment profile by circularly shifting the formed user equipment profile.

4. The method of the preceding claim, wherein a further broadcast profile is formed, using broadcast subframes, so that the said broadcast subframes comprised within the said further broadcast profile match with downlink subframes comprised within the said further user equipment profile.

5. The method of any of the preceding claims, wherein the downlink broadcast transmission is a multimedia broadcast and multicast service.

6. The method of the preceding claim, wherein the multimedia broadcast and multicast service is digital TV service.

7. The method of claim 5, wherein the multimedia broadcast and multicast service is a push-to-talk service.

8. The method of any of the preceding claims, further comprising a configuration step of radio resource control.

9. The method of any of the preceding claims, further comprising a step of using a counting message for allocating the said user equipment profile and the said broadcast profile to the said user equipment.

10. Computer program implemented on a processing unit of a computer, said program including code sections for performing instructions corresponding to the steps of a method according to any of claims 1-9.
